# EUROPÄISCHE PATENTSCHRIFT

(11) **EP 2 335 001 B1**
(45) Veröffentlichungstag und Bekanntmachung des Hinweises auf die Patenterteilung: **27.06.2012**
(21) Anmeldenummer: 09777843.5
(22) Anmeldetag: 12.08.2009
(51) Int. Cl.: F28D 9/00, F28F 3/08, F28F 21/04

(54) **BAUTEIL AUS EINEM STAPEL KERAMISCHER PLATTEN**
COMPONENT MADE OF A STACK OF CERAMIC PLATES
ÉLÉMENT DE CONSTRUCTION COMPOSÉ D'UN EMPILEMENT DE PLAQUES DE CÉRAMIQUE

(30) Priorität: 12.09.2008 DE 102008048014
(43) Veröffentlichungstag der Anmeldung: 22.06.2011
(73) Patentinhaber: ESK Ceramics GmbH & Co.KG, 87437 Kempten (DE)
(72) Erfinder: MESCHKE, Frank, 87474 Buchenberg (DE); LEMKE, Andreas, 85221 Dachau (DE); WILDHACK, Stefanie, 87437 Kempten (DE); SALANSKY, Paul, 87487 Ermengerst (DE)
(74) Vertreter: Merkle, Gebhard
(86) Internationale Anmeldenummer: PCT/EP2009/005860
(87) Internationale Veröffentlichungsnummer: WO 2010/028727

(56) Entgegenhaltungen:
- WO-A1-2007/110196
- DE-A1-102004 005 832
- DE-A1-102006 009 791
- DE-A1-102006 028 852
- US-A- 4 442 886

## Beschreibung

### Gebiet der Erfindung

Die Erfindung betrifft ein Bauteil aus einer Mehrzahl von aufeinandergestapelten Platten, von denen mindestens eine aus einem keramischen Werkstoff besteht, wobei der Plattenstapel mittels einer Spannvorrichtung kraftschlüssig verbunden ist und wobei zwischen den einzelnen Platten des Stapels jeweils eine speziell ausgebildete Flachdichtung angeordnet ist. Bei dem Bauteil kann es sich insbesondere um einen Plattenwärmeübertrager oder einen Reaktor handeln. DE 10 2006 013503 offenbart ein Bauteil gemäβ dem Oberbegriff des Anspruchs 1.

### Hintergrund der Erfindung

Keramische Komponenten finden im Anlagen- und Maschinenbau allgemein dort Anwendung, wo Verschleiß, Korrosion und hohe Temperaturbelastungen auftreten. Die Härte, chemische Beständigkeit und Wärmeleitfähigkeit von technischen Keramiken, insbesondere Siliciumcarbid-Keramiken, ist denen von Stählen und Graphit als Alternativwerkstoffe weit überlegen.

Siliciumcarbid (SiC) als Vertreter der technischen Keramik besitzt den besonderen Vorteil einer gegenüber Stahl 4-fach besseren thermischen Leitfähigkeit und einer Härte ähnlich der von Diamant. Das Gesamteigenschaftsprofil prädestiniert den Werkstoff neben dem Einsatz in Düsen, Ventilen, Gleitringdichtungen und Gleitlagern auch zum Einsatz in Wärmeübertragern und Mikroreaktoren.

In Wärmeübertragern und Mikroreaktoren müssen die Komponenten aus fluiddynamischen Gründen im Inneren sehr komplex geformt sein. Oftmals ist das Design unvereinbar mit den zur Verfügung stehenden keramischen Formgebungsverfahren, so dass ein Verbinden keramischer Einzelbestandteile unumgänglich ist. Es bieten sich kraft- und stoffschlüssige Verbindungen an.

### Stand der Technik

Gesintertes Siliciumcarbid (SSiC) ist im Bereich der Plattenwärmeübertrager und Mikroreaktoren ein neuer Werkstoff.

Eine stoffschlüssige Verbindung von SiC-Komponenten ist grundsätzlich möglich. Sie bietet gegenüber der kraftschlüssigen Verbindung den großen Vorteil, dass durchströmende gefährliche oder giftige Medien dauerhaft hermetisch abgedichtet sind. Gesintertes Siliciumcarbid kann insbesondere mit den Verfahren des Diffusionsschweißens. Laserstrahlschweißens und Lötens mit Metall- oder Glasloten stoffschlüssig gefügt werden. Den genannten Verfahren ist gemeinsam, dass die Komponenten dauerhaft und damit unzertrennlich verbunden werden.

Die DE 10 2004 044 942 A1 beschreibt ein Verfahren zum Fügen von SiC-Komponenten durch ein Diffusionsschweißverfahren, wobei die Komponenten verformungsarm zu einem Monolithen gefügt werden.

Diffusionsgeschweißte SiC-Komponenten und daraus hergestellte Bauteile, wie sie in der vorgenannten Druckschrift beschrieben sind, zeigen hinsichtlich der Standzeit erhebliche Vorteile, und sie können auch bei höchsten Temperaturen eingesetzt werden. Betriebsdrücke von 16 bar und mehr sind möglich. Ein Zerlegen für Wartungsarbeiten und Inspektion ist jedoch nicht oder nur zerstörend möglich. Eine Reinigung ist nur mit erhöhtem Aufwand über chemische oder pyrolytische Prozesse oder aber gar nicht möglich.

Diffusionsgeschweißte SiC-Wärmeübertrager sind zudem durch eine hohe Steifigkeit gekennzeichnet. Im Betrieb mit Medien hoher Temperaturunterschiede kann es zum Aufbau thermisch bedingter Spannungen kommen und es besteht, insbesondere bei Thermoschockbeanspruchung, ein Risiko der Schädigung.

In bestimmten Anwendungen ist gefordert, dass die Apparate einfach zerlegbar sein müssen, um das Reinigen und Entfernen von Belägen auf den Wärmeübertrager- oder Reaktoroberflächen mit wenig Aufwand zu bewerkstelligen. Hierfür ist der Einsatz von Dichtungen zwingend erforderlich.

In herkömmlichen Plattenwärmeübertragern werden durchströmende Fluide gegeneinander und nach außen hin mit Hilfe umlaufender Dichtungen, die zwischen den biegsamen Platten platziert sind, abgedichtet. In metallischen Plattenwärmeübertragern kommen als Dichtungsmaterial vorwiegend Elastomere wie NBR, EPDM, FPM und andere Kautschuksorten zum Einsatz, bei Graphit-Plattenwärmeübertragern vorwiegend PTFE.

Es ist bekannt, in die Ebene der Wärmeübertragerplatten stabilitätserhöhende und die Verteilung der Fluide verbessernde Strukturen einzubringen. Diese Strukturen sind so ausgeformt, dass sie im verspannten Zustand die benachbarte Wärmeübertragerplatte berühren und somit mittragen. Zum Stand der Technik gehören verschiedene Ausführungen der Abdichtungskonzepte. Darunter befinden sich umlaufende Dichtungen, die flach auf dem Außenbereich der Platten aufliegen, wobei die Oberflächenstrukturen der Platten leicht erhöht sind. Üblicher ist es jedoch, dass die Oberflächenstrukturen bündig gefertigt und die Dichtungen, z.B. O-Ringe, in Vertiefungen / Nuten eingelagert und fixiert werden.

Die GB 2 128 726 A beschreibt einen Plattenwärmeübertrager aus metallischen Werkstoffen wie beispielsweise Edelstahl oder Titan, bei dem die einzelnen Platten mittels in Nuten eingelegter umlaufender Dichtungen miteinander verbunden sind. Im Bereich der Zu- und Abführöffnungen für die Medien sind die Platten mit einer speziellen Struktur versehen, um die Dichtwirkung zu verbessern.

In der WO 00/77468 A1 ist ebenfalls ein (metallischer) Wärmeübertrager mit umlaufenden Dichtungen beschrieben, die in Nuten eingelegt werden. Die Dichtungen und die Nuten haben aus Gründen der besseren Fixierung der Dichtungen wenigstens eine zungenförmig ausgebildete Erweiterung. Die Dichtungen sind vorzugsweise aus Gummi.

Die EP 1 757 887 A1 beschreibt einen Wärmeübertragerblock, der aus zwei Platten mit aufgesetzten Hauben besteht. Die Räume zwischen den nach außen weisenden Oberflächen der Platten und den Hauben werden von einem Kühlmedium durchströmt. In den Platten sind Strömungskanäle für ein gasförmiges Medium vorgesehen, die durch einander ergänzende Nuten in den Plattenoberflächen gebildet werden.

Die Platten sind aus Graphit, einem keramischen Werkstoff oder einem Verbundwerkstoff aus einer Polymermatrix mit einem hohen Anteil darin verteilter wärmeleitfähiger Partikel hergestellt, die Hauben aus einem metallischen Werkstoff.

Die aus den beiden Platten bestehende Wärmeübertragereinheit ist mit den Hauben über umlaufende Flach- oder O-Ring-Dichtungen verbunden. Die beiden Platten sind miteinander mittels Kleber oder einer Weichdichtung zur Abdichtung des Spaltes zwischen den Platten verbunden.

Die EP 0 203 213 A1 beschreibt einen Plattenwärmeübertrager aus einem Graphit - Fluorpolymer - Verbundwerkstoff, bei dem zwischen die Rahmen benachbarter Plattenelemente korrosionsbeständige flexible Dichtungen eingelegt sind. Die Flachdichtungen sind beispielsweise aus Fluorpolymeren. Bevorzugt werden Graphitfolien eingesetzt, die auf 0,1 bis 0,3 mm zusammengepresst sind. Die Flachdichtungen sind umlaufend und liegen in Vertiefungen, die im Randbereich der Platten eingebracht sind.

Die DE 10 2006 013 503 A1 beschreibt einen Plattenwärmetauscher, dessen Platten Fluidstromführungskanäle aufweisen, in deren Seitenwände Durchbrüche vorgesehen sind, die zur Verwirbelung des Fluidstroms führen. Die Platten sind bevorzugt aus Keramikmaterial wie gesintertem Siliciumcarbid (SSiC). Die Platten können in einer Ausführungsform auch mit umlaufenden Dichtungen, beispielsweise aus Elastomermaterial, miteinander verbunden sein.

Den Dichtungskonzepten für Plattenwärmeübertrager mit Platten aus Metall, Kunststoff oder Graphit ist gemeinsam, dass die Platten in hohem Maße verformbar sind. Unebenheiten in den Platten oder der Konstruktion können durch Verformung ausgeglichen werden.

Wärmeübertragerkomponenten aus keramischen Werkstoffen sind hingegen extrem steif. Unebenheiten beispielsweise in den Platten oder der Konstruktion können nur bis zu einem sehr geringen Umfang durch Verformung ausgeglichen werden. Mit zunehmender Plattengröße und der Höhe des verspannten Plattenstapels steigt das Risiko, dass es zum Bruch der Platten kommt, stark an.

Bei der DE 10 2006 013 503 A1 liegen die einzelnen keramischen Platten nach der Montage des Plattenstapels hohl, das heißt zwischen den Stegen und den benachbarten Platten bilden sich Zwischenräume aus. Beim Verspannen des Stapels können Biegemomente auftreten, die zum Bruch des steifen keramischen Materials führen können (siehe Referenzbeispiele 2 und 3).

Die DE 196 17 396 A1 offenbart ein aus Platten aufgebautes Strömungsmodul mit profilierten Platten aus Kunststoff, Metall oder Graphit. Die Platten sind über umlaufende Dichtungen miteinander verbunden. Die Dichtungen sind vorzugsweise Elastomerdichtungen, die in umlaufende Nuten integriert sind, wobei sie entweder eingelegt oder auch einvulkanisiert oder eingespritzt werden können.

In der DE 10 2006 009 791 A1 sind gedichtete Platten aus keramischem Material für Wärmeübertrager beschrieben. Die Dichtungen sind hier als umlaufende O-Ring-Dichtungen ausgeführt. Die Wärmeübertragerplatten weisen in den den Strömungsbereich und die Durchgangsöffnungen umgreifenden Bereichen rechteckförmig ausgebildete Nuten auf, in denen jeweils ein Dichtsystem in O-Ring-Form angeordnet ist. Der Querschnitt der Nuten ist derart ausgebildet, dass diese im verspannten Zustand des Plattenstapels die O-RingDichtung komplett aufnehmen können, und die ebenen Oberflächen der Wärmeübertragerplatten sowohl auf den den Fluidstrom leitenden Stegen als auch auf den Plattenrandbereichen vollständig und spaltfrei aufeinander aufliegen.

Nachteil dieser Lösungen (DE 196 17 396 A1 und DE 10 2006 009 791 A1) ist, dass die Platten sehr maßgenau gefertigt werden müssen und auf größtmögliche Ebenheit und Planparallelität zu achten ist. Bei Platten, die herstellungsbedingt einen größeren Verzug oder Unebenheiten aufweisen, gelingt es nicht mehr, die Platten sowohl auf den Stegen als auch auf den Plattenrandbereichen vollständig und spaltfrei aufliegen zu lassen. Es entstehen wiederum Hohlräume und die Gefahr des Plattenbruchs beim Verspannen ist gegeben. Mit der Plattengröße steigt das Bruchrisiko noch an und damit auch der erforderliche Bearbeitungsaufwand und die Kosten der Wärmeübertragerplatte.

Ein weiterer Nachteil ist, dass diese Lösungen nur realisiert werden können, indem in die keramischen Platten eine umlaufende Rechtecknut mit hoher Fertigungsgenauigkeit eingearbeitet wird. Die Herausforderung in dem hier beschriebenen Dichtungskonzept besteht also darin, die Nuten in dem keramischen Material mit einer gleichbleibenden Tiefe herzustellen, um ideale Voraussetzung für die Funktion der Dichtung zu schaffen. Wenn die Dichtung bei unterschiedlichen Tiefen der Rechtecknut punktuell aus der Oberfläche herausragt, kommt es an den lokalen Erhebungen zu Spannungsspitzen, die beim Verspannen des Plattenstapels zu Plattenbruch führen (siehe Vergleichsbeispiel 1). Andererseits kommt es zu unerwünschter Leckage, wenn die Nut punktuell zu tief gestaltet wurde, und die Anpresskraft der Dichtung lokal reduziert ist oder gar fehlt.

Eine hierfür notwendige Rechtecknut mit geringen Fertigungstoleranzen im Bereich von wenigen Mikrometern ist jedoch fertigungstechnisch für keramische Platten sehr aufwendig und nur mit hohen Kosten realisierbar.

### Aufgabe der Erfindung

Der Erfindung liegt daher die Aufgabe zugrunde, ein Bauteil, insbesondere einen Plattenwärmeübertrager oder einen Plattenreaktor aus einer Mehrzahl von aufeinandergestapelten Platten zur Verfügung zu stellen, bei dem komplex geformte keramische Platten mit weiten Fertigungstoleranzen, vor allem in Bezug auf Ebenheit und Verzug, zu einer druckdichten, thermoschockbeständigen und zerlegbaren Einheit miteinander verbunden oder verspannt werden können, ohne dass es zu einem Bruch der Platten kommt.

### Zusammenfassung der Erfindung

Die vorstehende Aufgabe wird erfindungsgemäß gelöst durch ein Bauteil aus einer Mehrzahl von aufeinander gestapelten Platten gemäß Anspruch 1. Vorteilhafte oder besonders zweckmäßige Ausgestaltungen des Anmeldungsgegenstandes sind in den Unteransprüchen angegeben.

Gegenstand der Erfindung ist somit ein Bauteil aus einer Mehrzahl von aufeinander gestapelten Platten, von denen mindestens eine aus einem keramischen Werkstoff besteht und in welchen mittels Stegen ein Kanalbereich aus Fluidstrom-Führungskanälen ausgebildet ist, die mit Zu- und Abführöffnungen in Strömungsverbindung stehen, wobei der Plattenstapel mittels einer Spannvorrichtung kraftschlüssig verbunden ist und wobei zwischen den einzelnen Platten des Stapels jeweils eine Flachdichtung angeordnet ist, wobei die Flachdichtung aus einem elastischen und/oder komprimierbaren Material besteht und sowohl die den Kanalbereich und die Zu- und Abführöffnungen umgreifenden Bereiche als auch mindestens teilweise die Stegoberseiten der kanalbildenden Stege bedeckt.

Gemäß einer bevorzugten Ausführungsform handelt es sich bei dem erfindungsgemäßen Bauteil um einen Plattenwärmeübertrager.

Gemäß einer anderen bevorzugten Ausführungsform handelt es sich bei dem erfindungsgemäßen Bauteil um einen Reaktor, insbesondere um einen Plattenmikroreaktor mit mindestens zwei getrennten Fluidkreisläufen.

Die erfindungsgemäß vorgesehenen Flachdichtungen sind so gestaltet, dass neben der umlaufenden Dichtfläche um den durchströmten Kanalbereich und um die Zu- und Abführöffnungen der einzelnen Platten auch die Stegoberseiten der kanalbildenden Stege mindestens teilweise bedeckt werden. Hierfür ist es bevorzugt, dass bei der erfindungsgemäß eingesetzten Flachdichtung mindestens eine Verbindung zwischen zwei gegenüberliegenden Längs- oder Breitseiten des umlaufenden Teils der Dichtung vorhanden ist. Es ist aber auch möglich, dass nur Elemente der Plattenstruktur einschließlich eines Teils oder der Gesamtheit der Stegoberseiten der kanalbildenden Stege mit Dichtungsmaterial belegt sind, ohne dass eine oder mehrere Verbindungen zwischen zwei gegenüberliegenden Längs- oder Breitseiten der Dichtung vorhanden sind.

Gemäß der Erfindung, insbesondere mittels der speziellen Dichtungsgeometrie, können komplex geformte Wärmeübertragerplatten zu einer druckdichten, zerlegbaren Einheit verbunden werden. Keramische Platten mit weiten Fertigungstoleranzen, vor allem im Bezug auf Ebenheit und Verzug, können ohne Plattenbruch abgedichtet werden. Insbesondere können auch großformatige keramische Platten abgedichtet werden.

Im Gegensatz zum Stand der Technik müssen um den Strömungsbereich und die Zu- und Abführöffnungen keine Nuten eingearbeitet sein, so dass die Platten fertigungstechnisch einfacher und kostengünstiger herzustellen sind.

Die abgedichteten Einheiten sind druckfest und können vorzugsweise mit einem Innendruck von 8,5 bar oder mehr beaufschlagt werden, weiter vorzugsweise mit einem Innendruck von 16 bar oder mehr.

Das spezielle Design der erfindungsgemäßen Flachdichtungen bietet durch die erfindungsgemäß bevorzugte Verbindung zwischen den beiden Breit- oder Längsseiten des umlaufenden Teils der Dichtung gegenüber dem Stand der Technik eine höhere mechanische Stabilität und einen verbesserten Halt, was eine erhebliche Erleichterung in der Handhabung beim Dichtungswechsel bietet. Bei Innendruckbeaufschlagung der Bauteile wird ein Herausquetschen der Dichtung aus dem Dichtungsspalt erschwert.

Darüber hinaus bedingen die elastischen und/oder kompressiblen Dichtungen eine gute Thermoschockbeständigkeit des wärmetechnischen Bauteils sowie hohe Standzeit und Korrosionsbeständigkeit im Anwendungsbereich des jeweiligen Dichtungsmaterials.

### Detaillierte Beschreibung der Erfindung

Gemäß der Erfindung werden Bauteilkomponenten in Form von Platten, von denen mindestens eine aus einem keramischen Werkstoff besteht, insbesondere Wärmeübertrager- oder Mikroreaktorkomponenten, mittels zwischen die Platten gelegter, spezieller Flachdichtungen kraftschlüssig in einer Spannvorrichtung verbunden. Mittels der speziellen Dichtungsgeometrie können komplex geformte, wärmetechnische Komponenten zu einer druckdichten, zerlegbaren Einheit verbunden werden. Insbesondere können auch großformatige keramische Platten einschließlich solchen mit weiten Fertigungstoleranzen, vor allem in Bezug auf die Ebenheit und den Verzug, ohne Plattenbruch abgedichtet werden.

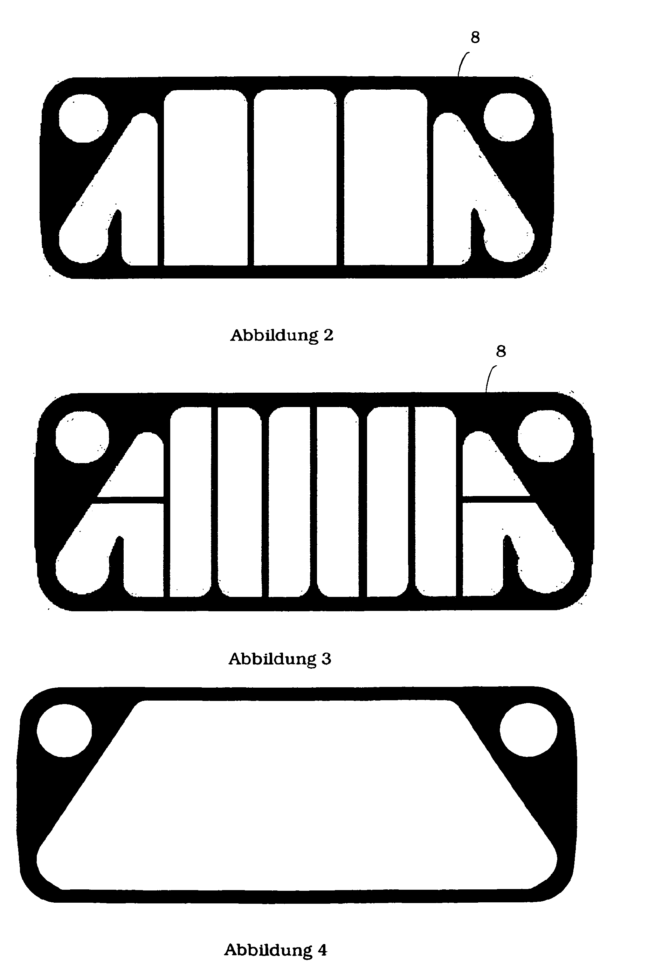

Vorzugsweise bedeckt die erfindungsgemäß vorgesehene Flachdichtung neben der umlaufenden Dichtfläche um den durchströmten Kanalbereich und den die Zu- und Abführöffnungen umgreifenden Bereich auch mindestens teilweise die Stegoberseiten der kanalbildenden Stege. Vorzugsweise bedeckt die Flachdichtung 50-100% der Stegoberseiten der kanalbildenden Stege (siehe auch Abbildungen 2 und 3). Die Bedeckung der Stegoberseiten durch die Flachdichtung kann jedoch auch weniger als 50% betragen. Vorzugsweise ist mindestens eine Verbindung zwischen zwei gegenüberliegenden Längs- oder Breitseiten des umflaufenden Teils der Dichtung vorhanden. Die beschriebenen Ausgestaltungen der Flachdichtung bewirken bei der Montage des Plattenstapels eine Abstützung der Platten untereinander und führen zu erhöhter Toleranz in Bezug auf Verspannung des Plattenstapels. Biegemomente in steifen keramischen Platten sowie ein möglicher Sprödbruch werden somit verhindert.

Möglich ist auch der Einsatz einer durchgängigen, vollflächigen Flachdichtung, bei der lediglich die Zu- und Abführöffnungen ausgespart sind. Vorzugsweise sind allerdings zusätzliche Aussparungen in der Flachdichtung vorgesehen, so dass die Flachdichtung im Kanalbereich nur auf einem Teil oder auf allen Stegen und nicht über den fluidleitenden Kanälen der Wärmetauscherplatten aufliegt. Vorzugsweise ist mindestens eine Verbindung zwischen den beiden gegenüberliegenden Längs- oder Breitseiten des umlaufenden Teils der Dichtung vorhanden. Diese Verbindungen zwischen dem umlaufenden Teil der Dichtung dienen dabei gleichzeitig zur Abstützung der keramischen Platten sowie zur Fixierung. Sie geben der Flachdichtung eine höhere mechanische Stabilität und einen verbesserten Halt, was eine erhebliche Erleichterung in der Handhabung beim Dichtungswechsel bietet. Zudem wird bei einer Innendruckbeaufschlagung der Bauteile ein Herausquetschen der Dichtung aus dem Dichtungsspalt erschwert. Dies ermöglicht ein Abdichten der Bauteile bis hin zu hohen Drücken von 16 und mehr.

Zusätzlich können im umlaufenden Bereich der Flachdichtung Aussparungen vorgesehen werden, welche die tragende Fläche reduzieren und somit die realisierbaren Flächenpressungen erhöhen.

Die erfindungsgemäß vorgesehenen Flachdichtungen bestehen aus einem elastischen und/oder komprimierbaren Material, dessen Elastizitätsmodul, Härte und/oder Gefügestruktur einerseits ein Verformen der Dichtung unter Belastung erlaubt, so dass Unebenheiten, Welligkeiten oder Verzug von steifen keramischen Wärmeübertragerplatten oder Reaktorplatten ausgeglichen werden können. Damit dient die erfindungsgemäß vorgesehene Dichtung - im Gegensatz zu metallischen oder graphitischen Plattenwärmeübertragern, bei denen die Platten elastisch oder verformbar sind - nicht nur zur Abdichtung der Wärmeübertragereinheit, sondern bewahrt keramische Platten auch vor hoher Verformung und möglichem Sprödbruch. Andererseits soll sich nach der bei der Montage auftretenden Verformung des Dichtungsmaterials ein Gleichgewichtszustand einstellen, der ein weiteres Fließen des Dichtungsmaterials unterbindet und somit gewährleistet, dass die Flachdichtung auch hohen Innendrücken standhält.

Die Flachdichtung besteht vorzugsweise aus Elastomeren, wie synthetischen, halbsynthetischen oder natürlichen Kautschukmaterialien, thermoelastischen Polymeren, thermoplastischen Polymeren, insbesondere Polytetrafluorethylen, oder aus Graphit. Die Komprimierbarkeit kann dabei auch von der Gefügestruktur des Dichtungsmaterials herrühren, wie es beispielsweise beim Einsatz geschäumter Kunststoffe möglich ist. Besonders bevorzugt sind Dichtungsfolien aus 100% reinem virginalen, extrudierten Polytetrafluorethylen (ePTFE). Die durch multidirektionales Recken erzeugte Faserstruktur dieses Dichtungsmaterials ermöglicht je nach verwendeter Folienausführung eine maximale Verformung von 40% und mehr ihrer Ausgangsdicke und ist damit besonders geeignet, größere Unebenheiten oder Verzug größerer keramischer Platten zu kompensieren. Nach vollständigem Komprimieren ist die Struktur verpresst und es liegt ein ausreichend druckfestes, dichtes Material vor.

Als Variante kann das Dichtungsmaterial Füllstoffe enthalten, beispielsweise zur Erhöhung der Wärmeleitfähigkeit.

Die Materialien haben vorzugsweise einen Kaltstauchwert ε_{KSW} gemäß DIN 28090-2 von ≥ 20%, weiter bevorzugt ≥ 30%, insbesondere bevorzugt ≥ 40%.

Ebenso haben die Materialien vorzugsweise eine Kompressibilität gemäß ASTM F36 von ≥ 20%, weiter bevorzugt ≥ 35%, insbesondere bevorzugt ≥ 45%.

Je nach Anwendungsfall der wärmetechnischen Bauteile müssen die Flachdichtungsmaterialien das Anforderungsprofil der jeweiligen wärmetechnischen Anwendung erfüllen. Diese Anforderungen können insbesondere sein: Langzeittemperaturstabilität bis mindestens 150 °C, Korrosionsbeständigkeit gegenüber Seewasser, Korrosionsbeständigkeit in sauren Medien, Korrosionsbeständigkeit in alkalischen Medien, Beständigkeit gegenüber Heißwasser und gegenüber Standarddichtungsmaterialien erhöhte Wärmeleitfähigkeit.

Die Flachdichtungsmaterialien weisen einen geringeren E-Modul auf als die Keramikwerkstoffe. Zwischen den Komponenten aufgebracht, können daher thermomechanische Spannungen im Betrieb abgebaut und damit höhere Thermoschockbelastungen zugelassen werden.

Die Dicke der eingesetzten Flachdichtung richtet sich nach dem Maß der Ungleichmäßigkeiten der wärmetechnischen Komponenten, die ausgeglichen werden sollen und ergibt sich aus der maximale Verformbarkeit des Dichtungsmaterials (= [h_{D1} - h_{D3]} / h_{D1}), wobei h_{D1} die Anfangsdicke und h_{D3} die Dicke nach Aufbringen der Hauptlast sind. Liegt beispielsweise in diagonaler Richtung der Platten ein Verzug von 200 *µ*m vor, muss eine Flachdichtung mit maximaler Verformung von 50 % zur druckfesten Abdichtung der Einheit eine Mindestausgangsdicke von 0,4 mm besitzen. Die maximale Verformung eines Materials ist allerdings nicht gleich zu setzen mit den in Datenblättern häufig zu findenden Werten für Kompressibilität (= [h_{D2} - h_{D3}] / h_{D2;} gemäß ASTM F36) und Kaltstauchverhalten (= [h_{D2} - h_{D3}] / h_{D1;} gemäß DIN 28090-2), bei denen h_{D2} die Dicke nach Aufbringen einer Vorlast darstellt.

Gemäß einer bevorzugten Ausführungsform besteht der keramische Werkstoff mindestens einer der Platten aus Siliciumcarbid (SiC), faserverstärktem Siliciumcarbid, gesintertem Siliciumcarbid (SSiC), Siliciumnitrid (Si₃N₄), Aluminiumoxid (Al₂O₃), Zirkondioxid (ZrO₂), Titandiborid (TiB₂) oder Kombinationen davon. Aufgrund der hohen Wärmeleitfähigkeit und der universellen Korrosionsbeständigkeit handelt es sich bevorzugt zumindest bei einer der zu verbindenden Platten um gesintertes Siliciumcarbid (SSiC). Besonders geeignet sind beispielsweise SSiC-Werkstoffe mit feinkörnigem Gefüge, vorzugsweise mit einer mittleren Korngröße < 5*µ*m, wie sie beispielsweise unter dem Namen EKasic^{®} F von ESK Ceramics GmbH & Co. KG vertrieben werden. Außerdem können aber auch grobkörnige SSiC-Werkstoffe eingesetzt werden, beispielsweise mit bimodalem Gefüge, wobei vorzugsweise 50 bis 90 Vol.-% der Korngrößenverteilung aus prismatischen, plättchenförmigen SiC-Kristalliten einer Länge von 100 bis 1500 *µ*m besteht und 10 bis 50 Vol.-% aus prismatischen, plättchenförmigen SiC-Kristalliten einer Länge von 5 bis weniger als 100 *µ*m (EKasic^{®} C von ESK Ceramics GmbH & Co. KG). Die Messung der Korngröße bzw. der Länge der SiC-Kristallite kann anhand von lichtmikroskopischen Gefügeaufnahmen, beispielsweise unter Zuhilfenahme eines Bildauswerteprogrammes, das den maximalen Feretschen Durchmesser eines Korns bestimmt, ermittelt werden.

Des Weiteren können je nach Funktion des Bauteils Komponenten oder Platten aus Glas, Aluminiumoxidkeramik oder anderer Keramiken, wie beispielsweise ZrO₂ und TiB₂ zum Einsatz kommen. Insbesondere kann es erwünscht sein, dass die Boden- und/oder Deckelplatte des Plattenstapels aus Glas besteht, um eine Beobachtungsmöglichkeit vorzusehen. Eine Deckelplatte aus Glas enthält keine einen Kanalbereich ausbildenden Stege.

Es können auch SiC-Werkstoffe eingesetzt werden, die bis zu 35 Vol.-% weiterer Stoffkomponenten, wie Graphit, B₄C oder andere keramische Partikel enthalten. Gemäß einer bevorzugten Ausführungsform besitzt das Bauteil einen rein keramischen Aufbau, das heißt sämtliche Platten bestehen aus einem keramischen Werkstoff, insbesondere bevorzugt aus SSiC.

In den einzelnen Platten der erfindungsgemäßen Bauteile ist mittels Stegen ein Kanalsystem bzw. Kanalbereich aus Fluidstrom-Führungskanälen ausgebildet. Gemäß einer bevorzugten Ausführungsform kann das Kanalsystem gemäß DE 10 2006 013 503 A1 so ausgebildet sein, dass sich ein im Wesentlichen mäanderförmiger Verlauf des Fluidstroms über die Fläche der Platten ergibt, wobei die Stege der Führungskanäle weiterhin eine Mehrzahl von Unterbrechungen oder Durchbrüchen aufweisen, die zu einer Verwirbelung des Fluidstroms führen. Eine solche Verwirbelung ermöglicht eine effiziente Wärmeübertragung und zugleich einen geringen Druckverlust. Ein weiterer Vorteil des Designs solcher Platten ist, dass sich Zuführ- und Abführöffnungen für die Fluidströme, beispielsweise in Form von Bohrungen bereits in die Platten integrieren lassen. Gemäß einer bevorzugten Ausführungsform sind die Führungskanäle in der Platte mit einer ersten Zuführöffnung und einer ersten Abführöffnung für ein erstes Fluid verbunden und die Platte ist mit einer zweiten Zuführöffnung und einer zweiten Abführöffnung für ein zweites Fluid zur Versorgung einer benachbarten Platte versehen, wobei diese Öffnungen in einfacher Weise durch Bohrungen vorgesehen werden können.

Die erfindungsgemäß eingesetzten Platten haben vorzugsweise eine Dicke im Bereich von 0,2-20 mm, weiter vorzugsweise 3-12 mm und insbesondere bevorzugt etwa 6-9 mm. Der Fluid- bzw. Stoffstrom in einer Austauschfläche einer Platte wird gemäß einem bevorzugten Kanalsystem mäanderförmig geleitet, um eine möglichst lange Verweilzeit zu ermöglichen. Die Stege der Führungskanäle in der Austauschfläche haben, vom Plattengrund aus gemessen, vorzugsweise eine Höhe im Bereich von 0,2-19 mm, weiter vorzugsweise 0,2-10 mm und insbesondere bevorzugt 0,2-6 mm, und sie schließen bündig mit der Oberfläche der Platten ab. Die Stege der Führungskanäle sind über Fräsen herstellbar, können jedoch auch über endkonturnahes Pressen gefertigt werden. Wenn die Stege der Führungskanäle gemäß der in DE 10 2006 013 503 A1 beschriebenen Ausführungsform Unterbrechungen oder Durchbrüche aufweisen, besitzen diese vorzugsweise eine Breite von 0,2-20 mm, weiter vorzugsweise 2-5 mm. Die durchbrochenen Stege der Führungskanäle dienen auch als Stützstellen und vermeiden bei Druckdifferenzen eine unerwünschte Verformung der Platten und beugen somit ebenfalls einem Plattenbruch vor.

Gemäß einer bevorzugten Ausführungsform des erfindungsgemäßen Bauteils sind sämtliche Platten des Stapels kraftschlüssig mittels einer jeweils zwischen den Platten angeordneten Flachdichtung verbunden, indem der Plattenstapel zwischen einer Boden- und einer Deckelplatte mittels einer Spannvorrichtung verspannt wird.

Gemäß einer anderen Ausführungsform können zwei Platten durch ein Diffusionsschweißverfahren stoffschlüssig zu einem nahtfreien monolithischen Platten-Block gefügt sein und mindestens zwei solcher monolithischen Platten-Blöcke kraftschlüssig mittels der Flachdichtung verbinden werden. In diesem Fall befinden sich die Flachdichtungen in der so verbundenen Einheit nur zwischen jeder zweiten Platte. Dieser Aufbau wird als "semi-welded" bezeichnet und erlaubt Anwendungen, bei denen die beiden Kanalsysteme unterschiedlichen Belastungen, beispielsweise unterschiedlichen korrosiven oder abrasiven Belastungen standhalten müssen. Beispielsweise kann ein Kanalsystem mit Kühlmedium gespült werden (gedichtete Seite) während das zweite Kanalsystem zur Förderung extrem aggressiver Medien dient (heißgefügte Seite). In dieser Ausführungsform wird die extrem hohe Abrasions- und Korrosionsbeständigkeit von insbesondere SiC-Komponenten mit den Vorteilen gedichteter Einheiten, insbesondere der erhöhten Thermoschockbeständigkeit, der Wiederzerlegbarkeit und Möglichkeit zur Reinigung der Kühlmediumseite kombiniert.

Gemäß einer anderen Ausführungsform dient das erfindungsgemäße Bauteil als Reaktor, beispielsweise für die Verdampfung und Kondensation, aber auch für andere Phasenumwandlungen, wie beispielsweise für gezielte Kristallisationsvorgänge. Beim Einsatz für die Verdampfung und Kondensation ist es zur Erzielung eines verringerten Druckverlustes bevorzugt, wenn der Abstand der Stege der Führungskanäle zueinander vom Fluideinlass zum Fluidauslass hin größer bzw. kleiner wird.

Für eine besonders effektive Nutzung als Reaktor ist es zweckdienlich, zwischen den oben beschriebenen Wärmeübertragerplatten Reaktorplatten einzubauen, wobei dann die Wärmeübertragerplatten zur Temperierung der Reaktorplatten dienen. Die Reaktorplatten können verschiedene Geometrien aufweisen. Für eine kontrollierte Verweilzeit und definierte Ausscheidungsreaktion, wie etwa für gezielte Kristallisationsvorgänge, ist es beispielsweise vorteilhaft, Reaktorplatten mit durchgezogenen geraden Kanälen zu verwenden. Es lassen sich aber auch in der Reaktorplatte mindestens zwei zunächst getrennte Fluidströme bei einer definierten Temperatur miteinander vermischen. Hierzu werden Kanalstrukturen verwendet, mit denen die Stoffströme in einem definierten Bereich der Reaktorplatte einander zugeführt und intensiv vermischt werden. Die Reaktorplatten können auch geeignete katalytische Beschichtungen aufweisen, die eine chemische Reaktion gezielt beschleunigen.

Die erfindungsemäßen Bauteile können ferner durch ein einfaches und kostengünstiges Verfahren hergestellt werden. Hierzu ist es lediglich erforderlich, den Plattenstapel mit den dazwischen angeordneten Flachdichtungen sowie eine Boden- und eine Deckelplatte mittels einer Spannvorrichtung zu verbinden. Beispielsweise erfolgt die Einspannung in einem Metallgestell zwischen zwei Stahlplatten, wobei die Flächenpressung durch das Anziehen von Schrauben über Federn auf das Bauteil übertragen wird.

Während der Bearbeitung der mit einem Kanalsystem versehenen Platten können die später mit den Flachdichtungen in Berührung kommenden Flächen sandgestrahlt, geläppt, geschliffen oder poliert werden. Bevorzugt ist jedoch die Verwendung von unbearbeiteten as-sintered Oberflächen für die Verbindung mittels Flachdichtungen. Je nach Grad der Oberflächenbearbeitung weisen die keramischen Platten mehr oder weniger Unebenheiten, Welligkeiten oder Verzug, oftmals von mehreren 100 *µ*m, auf.

Im Gegensatz zum Stand der Technik müssen um den Kanalbereich und um die Zu- und Abführöffnungen der Platten keine Nuten zur Aufnahme der Dichtungen eingearbeitet sein, so dass die keramischen Platten fertigungstechnisch einfacher und kostengünstiger herzustellen sind.

Für Anwendungen mit hochkorrosiven Medien bei hohen Temperaturen kann es jedoch vorteilhaft sein, Nuten, beispielsweise Rechtecknuten, um den Kanalbereich und die Zu- und Abführöffnungen einzubringen. Diese Nuten dienen jedoch lediglich als zusätzlicher Sicherheitspuffer. Es hat sich gezeigt, dass die komprimierbare Flachdichtung im Bereich solcher Nuten beim Verspannen während der Montage eine Wulst ausbildet, die einer korrosiven Flüssigkeit als weitere Barriere entgegenwirkt. Diese Wulst reicht jedoch nicht bis zum Boden der Nut und ist somit nicht tragend.

Der Zuschnitt der Flachdichtungen kann manuell oder durch serientechnische Verfahren, wie beispielsweise Wasserstrahlenschneiden, Lasern oder Stanzen erfolgen.

Zur Montage werden die Platten und die Flachdichtungen mit Druckluft oder Flüssigreinigern gereinigt und zusammengesetzt. Die Einspannung erfolgt geeingeterweise in einem Metallgestell zwischen zwei Stahlplatten, wobei die Flächenpressung durch das Anziehen von Schrauben über Federn auf das System übertragen wird.

Bei der Montage können die erfindungsgemäß ausgebildeten Flachdichtungen erforderlichenfalls mit einem Kleber lokal auf den Platten fixiert werden. Alternativ können die Flachdichtungen bei der Montage durch überstehende und/oder abgewinkelte Zungen fixiert werden. Weiterhin alternativ kann in die Oberfläche der Platten lokal eine Vertiefung eingebracht werden, worin die Flachdichtung zur Fixierung für die Montage eingehängt wird. Eine Fixierung mittels einer der vorgenannten oder einer anderen Methode ist aber für die Montage nicht zwingend erforderlich.

### Kurze Beschreibung der beigefügten Zeichnungen

**Abbildung 1** zeigt die Draufsicht einer erfindungsgemäß bevorzugt eingesetzten Wärmeübertragerplatte aus gesintertem Keramikmaterial;
**Abbildungen 2 und 3** zeigen Draufsichten bevorzugter Ausführungsformen der erfindungsgemäß eingesetzten Flachdichtungen;
**Abbildung 4** zeigt eine Ausführungsform einer umlaufenden Dichtung aus Referenzbeispiel 3; und
**Abbildung 5** zeigt die Draufsicht einer erfindungsgemäß bevorzugt eingesetzten Reaktorplatte.

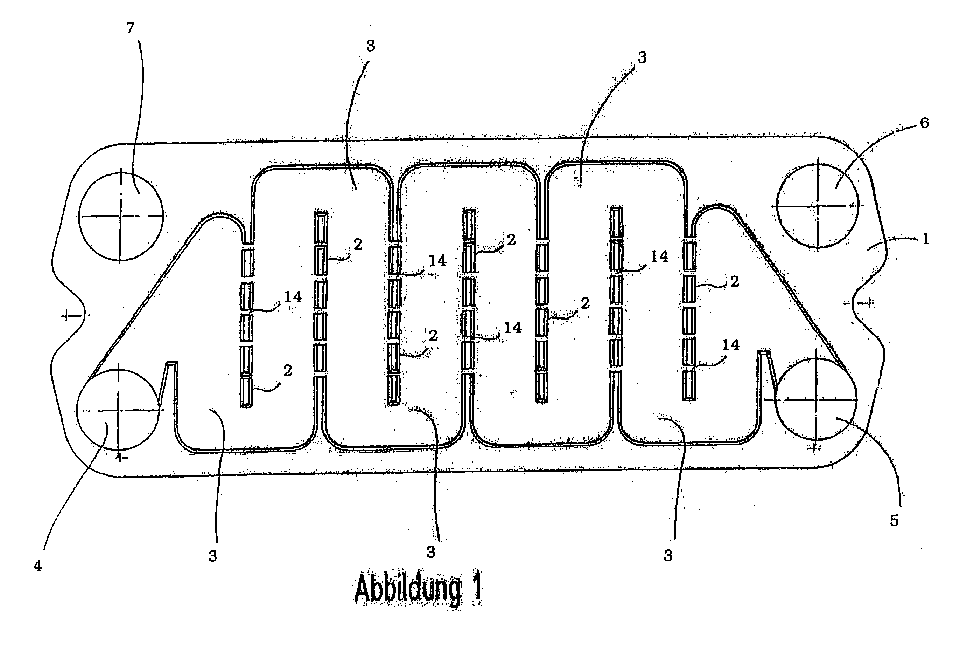

Wie in **Abbildung 1** gezeigt, weist eine erfindungsgemäß einsetzbare Platte 1 ein aus Führungskanälen 3 gebildetes Kanalsystem auf, das einen im wesentlichen mäanderförmigen Verlauf des Fluidstroms über die Fläche der Platte ermöglicht. Die Seitenwände der Führungskanäle 3 bestehen bei dieser Abbildung aus Stegen 2 mit einer Breite von 3 mm, welche eine Vielzahl von Durchbrüchen 14 mit einer Breite von 3,5 mm aufweisen. Die Platte weist weiterhin eine erste Zuführöffnung 4 sowie eine erste Abführöffnung 5 für einen Fluidstrom, jeweils in Form einer Bohrung mit einem Radius von 30 mm auf. Ferner sind in der Platte eine zweite Zuführöffnung 6 und eine zweite Abführöffnung 7, die als Durchführung zur Versorgung einer Nachbarkammer mit einem anderen Medium dienen, vorgesehen. Die zweite Zuführöffnung und zweite Abführöffnung bestehen jeweils aus Bohrungen mit einem Radius von 32 mm. Die Gesamtlänge der Platte beträgt bei dieser Ausführungsform 500 mm und deren Breite 200 mm. Wie ersichtlich, weist das Kanalsystem bei dieser Ausführungsform eine Spiegelsymmetrie auf. Durch diese Spiegelsymmetrie wird ermöglicht, dass die Platten abwechselnd um jeweils 180° verdreht gegeneinander aufeinander gestapelt werden können, so dass die Zuführöffnungen sich abwechselnd einmal links und einmal rechts befinden.

Die **Abbildungen 2 und 3** zeigen Draufsichten von zwei Ausführungsformen erfindungsgemäß eingesetzter Flachdichtungen 8. Bei der Flachdichtung 8 der Abbildung 2 werden nicht nur die den Kanalbereich und die Zu- und Abführöffnungen umgreifenden Bereiche der Platte 1, sondern auch etwa 50% der Stegoberseiten der kanalbildenden Stege 2 der Platte 1 bedeckt. Bei der Abbildung 3 bedeckt die Flachdichtung 8 etwa 100% der Stegoberseiten der kanalbildenden Stege 2 der Platte 1.

Bei der in **Abbildung 4** gezeigten Flachdichtung eines Referenzbeispiels werden lediglich die den Kanalbereich und die Zu- und Abführöffnungen umgreifenden Bereiche der Platte 1, jedoch nicht die Stegoberseiten der kanalbildenden Stege 2 bedeckt.

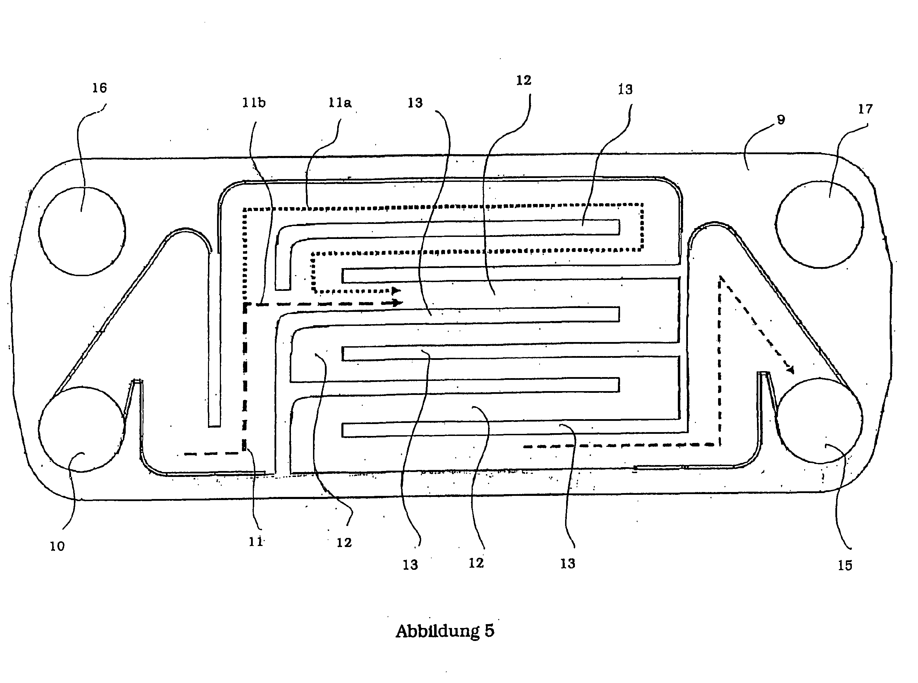

Die **Abbildung 5** zeigt eine erfindungsgemäß einsetzbare Reaktorplatte 9 mit einer Zuführöffnung 10 für einen Fluidstrom 11, welcher die Reaktionspartner bereits in gemischter Form enthält. Der gemischte Fluidstrom 11 wird mittels einer geeigneten Kanalführung zunächst in zwei getrennte Fluidströme 11a und 11b aufgespalten, die danach wegversetzt wieder zusammengeführt werden (Split-Recombine-Mischereinheit). Durch diesen Wegversatz kann eine bessere Vermischung und damit eine bessere Umsetzung der Reaktionspartner erreicht werden. Der Fluidstrom wird dann durch ein Kanalsystem 12 geleitet, das durch Stege 13 begrenzt wird und verlässt dann die Reaktorplatte 9 durch die Abführöffnung 15. Die beiden Bohrungen 16 und 17 sind für die Versorgung benachbarter Wärmeübertragerplatten bestimmt. Die in Abbildung 5 gezeigte Reaktorplatte kann mit den erfindungsgemäß ausgebildeten Flachdichtungen, wie sie in den Abbildungen 2 und 3 gezeigt sind, kombiniert werden. In diesem Fall sind die Führungskanäle 12 der Reaktorplatte 9 nur teilweise mit Dichtungsmaterial bedeckt, da die Verbindungen zwischen den Längsseiten der Flachdichtung 8 quer zur Richtung der Führungskanäle 12 verlaufen.

### Beispiele, Referenz- und Vergleichsbeispiele

Die nachfolgenden Beispiele, Referenzbeispiele und Vergleichsbeispiele dienen zur weiteren Erläuterung der Erfindung.

### Beispiel 1

### Wärmeübertrager mit PTFE, Design Abb. 2, Stegfläche 50 %, Dicke 0.5 mm

(1) Es werden SSiC-Platten mit bimodalem Gefüge verwendet, wobei 50 bis 90 Vol.-% der Korngrößenverteilung aus prismatischen, plättchenförmigen SiC-Kristalliten einer Länge von 100 bis 1500 *µ*m besteht und 10 bis 50 Vol.-% aus prismatischen, plättchenförmigen SiC-Kristallite einer Länge von 5 bis weniger als 100 *µ*m (EKasic^{®} C von ESK Ceramics GmbH & Co.). Die SSiC-Platten haben eine Länge von 500 mm, eine Breite von 200 mm und eine Dicke von 6,5 mm.
(2) Für die Herstellung einer Wärmeübertragereinheit werden vier (Zwischen-)Platten sowie eine Boden- und eine Deckelplatte verwendet. In die Zwischenplatten eingearbeitet finden sich 3,5 mm tiefe Führungskanäle nach Art der Abbildung 1, die das spätere Kanalsystem ausbilden. Die Boden- und Deckelplatten enthalten keine Kanalstruktur, der Deckel ist mit Zuführungsöffnungen versehen. Die Platten sind in der Einheit so angeordnet, dass zwei Stoffströme im Gegenstrom Wärme austauschen können.
(3) Als Dichtungsmaterial wird eine Folie aus ePTFE mit der Bezeichnung WT-A verwendet. Die multidirektionale Faserstruktur ermöglicht ein Verformen der PTFE-Dichtung unter Belastung, so dass Unebenheiten, Welligkeiten oder Verzug der verwendeten SSiC-Platten ausgeglichen werden können. Nach Datenblatt besitzt das Material einen Kaltstauchwert gemäß DIN 28090-2 von 40 %.

Zur Ermittlung der notwendigen Folien-Ausgangsdicke ist jedoch die maximale Verformbarkeit notwendig, die mit Hilfe einer Druck-Prüfapparatur bestimmt wurde. Die im Beispiel verwendete Folie erlaubt eine maximale Verformung bis auf etwa 50 % ihrer Ausgangsdicke.
(4) Die während der Hartbearbeitung geschliffenen Oberflächen der SSiC-Platten zeigen in diagonaler Richtung einen Verzug von etwa 200 *µ*m. Als Dichtungsmaterial wird daher ePTFE-Folie verwendet, die diese Unebenheit vollständig ausgleichen kann. Die Ausgangsdicke ist mit 0,5 mm so gewählt, dass bei vollständiger Verpressung sich eine Restdicke von 0,25 mm einstellt. Es ist aber auch möglich mit Dichtungen zu arbeiten, die diese Dicke überschreiten.
(5) Das Design der elastischen PTFE-Dichtung entspricht Abbildung 2. Es ist dadurch gekennzeichnet, dass neben der umlaufenden Dichtfläche im Außenbereich der verwendeten SSiC-Platten auch 50 % der Oberseiten der keramischen Stege mit Dichtungsmaterial belegt sind. Es wird durch manuellen Zuschnitt hergestellt.
(6) Die Platten und Folien werden mit Druckluft gereinigt und während der Montage zusammengesetzt. Die Einspannung erfolgt in einem Metallgestell zwischen zwei Stahlplatten; die Flächenpressung wird durch das Anziehen von Schrauben über Federn auf das System übertragen.
(7) Zum Drucktest werden die Kanäle der im Metallgestell montierten Einheit über die Zuführungen mit Wasser beaufschlagt. Je nach eingestellter Flächenpressung können dabei Innendrücke bis 23 bar aufgebracht werden, ohne dass die verbundene Wärmeübertragereinheit leckt.

Bei einer Flächenpressung von 6 N/mm² ergibt sich beispielsweise ein maximal zulässiger Innendruck von 13 bar.

### Beispiel 2

### Wärmeübertrager mit PTFE, Design Abb. 3, Stegfläche 100 %, Dicke 0,7 mm

(1) Es werden SSiC-Platten aus EKasic^{®} C (Gefüge und Verzug wie in Beispiel 1 beschrieben) mit einer Länge von 500 mm, einer Breite von 200 mm und einer Dicke von 6,5 mm verwendet.
(2) Die Wärmeübertragereinheit besteht aus vier (Zwischen-)Platten sowie einer Boden- und einer Deckelplatte, die im Gegenstrom geschaltet sind.
(3-5) Als Dichtung wird eine 0,7 mm dicke ePTFE-Folie mit der Bezeichnung WT-A (maximale Verformung bis auf etwa 50 % ihrer Ausgangsdicke) verwendet. Das Design der Dichtung entspricht Abbildung 3. Es ist dadurch gekennzeichnet, dass neben der umlaufenden Dichtfläche im Außenbereich der verwendeten SSiC-Platten 100 % der Oberseiten der keramischen Stege mit Dichtungsmaterial belegt sind. Der Zuschnitt erfolgt über Wasserstrahlschneiden.
(6) Die Platten und Folien werden mit Druckluft gereinigt und im Metallgestell zwischen zwei Stahlplatten eingespannt.
(7) Zum Drucktest werden die Kanäle der im Metallgestell montierten Einheit über die Zuführungen mit Wasser beaufschlagt. Die verbundene Wärmeübertragereinheit zeigt bei einer Flächenpressung von 9,5 N/mm² und einem Innendruck von 23 bar keine Leckage.

### Beispiel 3

### Wärmeübertragern mit PTFE, Design Abb. 2, Stegfläche 50 %, Dicke 0,5 mm, Platten mit Nut

(1) Es werden SSiC-Platten aus EKasic^{®} C (Gefüge und Verzug wie in Beispiel 1 beschrieben) mit einer Länge von 500 mm, einer Breite von 200 mm und einer Dicke von 6,5 mm verwendet.
(2) Für die Herstellung einer Wärmeübertragereinheit werden vier (Zwischen-)Platten sowie eine Boden- und eine Deckelplatte verwendet. In die Zwischenplatten eingearbeitet finden sich 3,5 mm tiefe Führungskanäle, die das spätere Kanalsystem ausbilden sowie eine umlaufende Rechtecknut einer Tiefe von 2 mm ± 0,1 mm. Die Boden- und Deckelplatten enthalten keine Kanalstruktur, der Deckel ist mit Zuführungsöffnungen versehen. Die Platten sind in der Einheit so angeordnet, dass zwei Stoffströme im Gegenstrom Wärme austauschen können.
(3-5) Als Dichtungsmaterial wird die in Beispiel 1 beschriebene 0,5 mm dicke ePTFE-Folie mit der Bezeichnung WT-A verwendet. Das Design der Flachdichtung entspricht Abbildung 2 mit 50 % belegter Oberseiten der keramischen Stege.
(6) Die Platten und Folien werden mit Druckluft gereinigt und im Metallgestell zwischen zwei Stahlplatten eingespannt.
(7) Zum Drucktest werden die Kanäle der im Metallgestell montierten Einheit über die Zuführungen mit Wasser beaufschlagt. Die verbundene Wärmeübertragereinheit zeigt eine zu Beispiel 1 vergleichbare Abhängigkeit von eingestellter Flächenpressung und erzielbarem Innendruck. Bei einer Flächenpressung von 6 N/mm² ergibt sich entsprechend ein Innendruck von 13 bar.
(8) Nach der Demontage der Wärmeübertragereinheit ist auf der PTFE-Dichtung eine leichte Wulst zu beobachten, die sich bei der Verformung des elastischen Dichtungsmaterials im Bereich der Nuten gebildet hat. Sie hat die Dicke der Ausgangsfolie und reicht damit nicht bis zum Boden der Nut, ist also nicht tragend. Außerdem hat sie, wie unter (7) beschrieben, keinen Einfluss auf die Dichtwirkung. Beim Betreiben der Wärmeübertragereinheit mit korrosiven Medien bei hohen Temperaturen wäre es allerdings denkbar, sie als Sicherheitspuffer einzusetzen.

### Beispiel 4

### Wärmeübertrager mit Graphitfolie, vollflächig, Dicke 1 mm

(1) Es werden SSiC-Komponenten mit feinkörnigem Gefüge verwendet, wobei die mittlere Korngröße < 5*µ*m liegt (EKasic^{®} F von ESK Ceramics GmbH & Co.). Die SSiC-Platten haben eine Länge von 500 mm, eine Breite von 200 mm und eine Dicke von 6.5 mm.
(2) Die Wärmeübertragereinheit besteht aus vier (Zwischen-)Platten sowie einer Boden- und einer Deckelplatte, die im Gegenstrom geschaltet sind.
(3-5) Als Dichtung wird eine 1 mm dicke, vollflächige elastische Graphitfolie verwendet. Der Zuschnitt der Zuführöffnungen erfolgt manuell. Die geschliffenen Oberflächen der SSiC-Platten zeigen in diagonaler Richtung einen leichten Verzug von etwa 100 *µ*m.
(6) Die Platten und Folien werden mit Druckluft gereinigt und im Metallgestell zwischen zwei Stahlplatten eingespannt.
(7) Zum Drucktest werden die Kanäle der im Metallgestell montierten Einheit über die Zuführungen mit Wasser beaufschlagt. Die verbundene Wärmeübertragereinheit zeigt bei einer Flächenpressung von 6,5 N/mm² und einem Innendruck von 9 bar keine Leckage.

### Beispiel 5

### Wärmeübertrager mit PTFE, Design Abb. 2, Stegfläche 50 %, Dicke 0,7 mm, zyklischer Prüfstandtest

(1) Es werden SSiC-Platten aus EKasic^{®} C (Gefüge und Verzug wie in Beispiel 1 beschrieben) mit einer Länge von 500 mm, einer Breite von 200 mm und einer Dicke von 6.5 mm verwendet.
(2) Die Wärmeübertragereinheit besteht aus vier (Zwischen-)Platten sowie einer Boden- und einer Deckelplatte, die im Gegenstrom geschaltet sind.
(3-5) Als Dichtung wird eine 0,7 mm dicke ePTFE-Folie mit der Bezeichnung WT-A (maximale Verformung bis auf etwa 50 % ihrer Ausgangsdicke) verwendet, deren Design Abbildung 2 mit 50 % belegter Oberseiten der keramischen Stege entspricht.
(6) Die Platten und Folien werden mit Druckluft gereinigt und im Metallgestell zwischen zwei Stahlplatten mit einer Flächenpressung von 6 N/mm² eingespannt.
(7) Die gedichtete Einheit wird mit Metallgestell in die Prüfapparatur eingesetzt. Eine Seite der Kanäle wird über die Zuführungen mit 16 °C kaltem Kühlwasser (Durchfluss 1000 l/h) gespült, die zweite Seite mit Dampf (150 °C, 4 bar, ca. 130 kg/h). Nach einer Haltezeit von 6 h werden mehrere Zyklierungen durchgeführt, wobei abwechselnd Kühlwasser und Dampf schlagartig ab- und zugeschaltet werden. Die gedichtete Einheit übersteht sowohl die Haltezeit als auch die Temperaturzyklen, ohne erkennbaren Schaden am Wärmeübertrager.

### Referenzbeispiel 1

### Wärmeübertrager mit PTFE, vollflächig, Dicke 0,25 mm

(1) Die Struktur der SSiC-Platten (Gefüge, Maße, Design, Unebenheit), der Aufbau der Wärmeübertragereinheit sowie die Montage wurden aus Beispiel 1 übernommen.
(2) Als Dichtungsmaterial wird eine vollflächige ePTFE-Folie mit der Bezeichnung WT-A (maximale Verformung bis auf etwa 50 % ihrer Ausgangsdicke) verwendet. Der Zuschnitt der Zuführöffnungen erfolgt manuell. Die Ausgangsdicke ist mit 0,25 mm, das heißt 0,125 mm Dicke bei vollständiger Verpressung, kleiner gewählt als die Unebenheit der Platten (etwa 200 *µ*m).
(3) Zum Drucktest werden die Kanäle der im Metallgestell montierten Einheit über die Zuführungen mit Wasser beaufschlagt. Das System zeigt trotz der vergleichbar zu Beispiel 1 eingestellten Flächenpressung von 6,5 N/mm² bereits ab 1 bar eine erhöhte Leckage. Aufgrund der vollflächigen Abstützung der SSiC-Platten wird allerdings kein Plattenbruch beobachtet.

### Referenzbeispiel 2

### Wärmeübertrager mit PTFE-Schnur, umlaufende Dichtung

(1) Die Struktur der SSiC-Platten (Gefüge, Maße, Design, Unebenheit) und der Aufbau der Wärmeübertragereinheit wurden aus Beispiel 1 übernommen.
(2) Als Dichtung wird eine komprimierbare PTFE-Rundschnur verwendet. Die Schnur wird als umlaufende Dichtung um den Strömungsbereich und um die Zuführöffnungen der SSiC-Platten gelegt und auf eine Dicke von 0,1 mm (kleiner als die Unebenheit der Platten) verpresst. Danach erfolgt die Montage im Metallgestell.
(3) Zum Drucktest werden die Kanäle der im Metallgestell montierte Einheit über die Zuführungen mit Wasser beaufschlagt. Das System ist im drucklosen Zustand undicht, unabhängig von der eingestellten Flächenpressung. Außerdem wird bei den Montagen vereinzelt Plattenbruch beobachtet.

Die beim Verspannen eingebrachten Biegemomente können offensichtlich nicht immer aufgefangen werden und es kommt zum Bruch einzelner SSiC-Platten.

### Referenzbeispiel 3

### Wärmeübertrager mit PTFE, Dicke 0,7 mm, als umlaufende Dichtung

(1) Die Struktur der SSiC-Platten (Gefüge, Maße, Design, Unebenheit) und der Aufbau der Wärmeübertragereinheit wurden aus Beispiel 1 übernommen.
(2) Als Dichtung wird eine 0,7 mm dicke ePTFE-Folie mit der Bezeichnung WT-A (maximale Verformung bis auf etwa 50 % ihrer Ausgangsdicke) verwendet. Das Design der Dichtung entspricht dem einer umlaufenden Dichtung, das heißt lediglich der Außenbereich der SSiC-Platten sowie der Bereich um die Zuführöffnungen sind mit Dichtungsmaterial belegt (Abbildung 4). Der Zuschnitt erfolgt manuell.
(3) Die Platten und Folien werden mit Druckluft gereinigt und während der Montage zusammengesetzt. Die Einspannung erfolgt in einem Metallgestell zwischen zwei Stahlplatten; die Flächenpressung wird durch das Anziehen von Schrauben über Federn auf das System übertragen. Bereits vor Erreichen der Flächenpressung von 6 N/mm² kommt es zum Plattenbruch. Ein Drucktest ist nicht möglich.

Die eingebrachten Biegemomente führen bei mehreren der im inneren Bereich ungestützten SSiC-Platten gleichzeitig zum Bruch.

### Vergleichsbeispiel 1

### Wärmeübertrager mit Elastomerdichtung in Nut

(1) Es werden SSiC-Platten aus EKasic^{®} C (Gefüge wie in Beispiel 1 beschrieben) mit einer Länge von 500 mm, einer Breite von 200 mm und einer Dicke von 6.5 mm verwendet. Die geschliffenen Oberflächen der SSiC-Platten zeigen in diagonaler Richtung einen Verzug von etwa 100 *µ*m.
(2) Für die Herstellung einer Wärmeübertragereinheit werden vier (Zwischen-)Platten sowie eine Boden- und eine Deckelplatte verwendet. In die Zwischenplatten eingearbeitet finden sich 3,5 mm tiefe Führungskanäle, die das spätere Kanalsystem ausbilden sowie eine umlaufende Rechtecknut einer Tiefe von 2 mm ± 0,1 mm. Die Boden- und Deckelplatten enthalten keine Kanalstruktur, der Deckel ist mit Zuführungsöffnungen versehen. Die Platten sind in der Einheit so angeordnet, dass zwei Stoffströme im Gegenstrom Wärme austauschen können.
(3) Zur Dichtung der SSiC-Platten wird entsprechend DE 196 17 396 A1 ein Elastomer (Silikonprofil Dow D94-30P) in die umlaufenden Nuten einvulkanisiert.
(4) Die Platten werden mit Druckluft gereinigt und für die Montage im Metallgestell zwischen zwei Stahlplatten zusammengesetzt. Eine Einspannung ist jedoch nicht möglich, beim ersten Anziehen der Schrauben kommt es zum Plattenbruch. Ein Drucktest ist nicht möglich.
(5) Die Ursache des Plattenbruchs liegt darin begründet, dass die Tiefe der Rechtecknuten über die 500 mm lange SSiC-Platte nicht homogen eingestellt werden kann und somit die Elastomerdichtung beim Einspannen nicht an allen Stellen vollständig in der Nut verschwindet. Dadurch kommt es zu lokalen Erhebungen, die als Spannungsspitzen wirken und zum Plattenbruch führen.

## Patentansprüche

1. Bauteil, umfassend eine Mehrzahl von aufeinander gestapelten Platten (1), von denen mindestens eine aus einem keramischen Werkstoff besteht und in welchen mittels Stegen (2) ein Kanalbereich aus Fluidstrom-Führungskanälen (3) ausgebildet ist, die mit Zu- und Abführöffnungen (4, 5, 6, 7) in Strömungsverbindung stehen, wobei der Plattenstapel mittels einer Spannvorrichtung kraftschlüssig verbunden ist und wobei zwischen den einzelnen Platten (1) des Stapels jeweils eine Flachdichtung (8) angeordnet ist, wobei die Flachdichtung (8) aus einem elastischen und/oder komprimierbaren Material besteht und **dadurch gekennzeichnet, daß** sie sowohl die den Kanalbereich und die Zu- und Abführöffnungen (4, 5, 6, 7) umgreifenden Bereiche als auch mindestens teilweise die Stegoberseiten der kanalbildenden Stege (2) bedeckt.

2. Bauteil nach Anspruch 1, wobei die Flachdichtung (8) 50-100% der Stegoberseiten der kanalbildenden Stege (2) bedeckt.

3. Bauteil nach Anspruch 1 und/oder 2, wobei die Flachdichtung (8) aus Elastomeren, thermoelastischen Polymeren, thermoplastischen Polymeren, vorzugsweise aus extrudiertem Polytetrafluorethylen (ePTFE), oder aus Graphit besteht.

4. Bauteil nach mindestens einem der vorangehenden Ansprüche, wobei die Flachdichtung (8) aus einem Material mit einem Kaltstauchwert ε_{KSW} gemäß DIN 28090-2 von ≥ 20%, vorzugsweise ≥ 30%, weiter vorzugsweise ≥ 40% besteht.

5. Bauteil nach mindestens einem der vorangehenden Ansprüche, wobei die Flachdichtung (8) aus einem Material mit einer Kompressibilität gemäß ASTM F36 von ≥ 20%, vorzugsweise ≥ 35%, weiter vorzugsweise ≥ 45% besteht.

6. Bauteil nach mindestens einem der vorangehenden Ansprüche, wobei der keramische Werkstoff mindestens einer der Platten (1) aus Siliciumcarbid (SiC), faserverstärktem Siliciumcarbid, gesintertem Siliciumcarbid (SSiC), Siliciumnitrid (Si₃N₄), Aluminiumoxid (Al₂O₃), Zirkondioxid (ZrO₂), Titandiborid (TiB₂) oder Kombinationen davon, vorzugsweise aus gesintertem Siliciumcarbid (SSiC), besteht.

7. Bauteil nach mindestens einem der vorangehenden Ansprüche, wobei die Führungskanäle (3) in der Platte (1) mit einer ersten Zuführöffnung (4) und einer ersten Abführöffnung (5) für ein erstes Fluid in Strömungsverbindung stehen, und die Platte (1) mit einer zweiten Zuführöffnung (6) und einer zweiten Abführöffnung (7) für ein zweites Fluid zur Versorgung einer benachbarten Platte (1) versehen ist.

8. Bauteil nach mindestens einem der vorangehenden Ansprüche, wobei die Platten (1) eine Dicke im Bereich von 0,2-20 mm, vorzugsweise 3-12 mm, weiter vorzugsweise 6-9 mm, aufweisen.

9. Bauteil nach mindestens einem der vorangehenden Ansprüche, wobei die Stege (2) der Führungskanäle (3) eine Höhe im Bereich von 0,2-19 mm, vorzugsweise 0,2-10 mm, weiter vorzugsweise 0,2-6 mm, aufweisen und bündig mit der Oberfläche der Platten (1) abschließen.

10. Bauteil nach mindestens einem der vorangehenden Ansprüche, wobei die Führungskanäle (3) so ausgebildet sind, dass sich ein im Wesentlichen mäanderfömiger Verlauf des Fluidstoms über die Fläche der Platten (1) ergibt, wobei die Stege (2) weiterhin eine Mehrzahl von Unterbrechungen oder Durchbrüchen (14) aufweisen, die zu einer Verwirbelung des Fluidstroms führen.

11. Bauteil nach mindestens einem der vorangehenden Ansprüche, wobei zwei keramische Platten (1) durch ein Diffusionsschweißverfahren stoffschlüssig zu einem nahtfreien monolithischen Platten-Block gefügt sind und mindestens zwei solcher monolithischen Platten-Blöcke kraftschlüssig mittels der Flachdichtung (8) verbunden sind.

12. Bauteil nach mindestens einem der vorangehenden Ansprüche, bei dem es sich um einen Plattenwärmeübertrager handelt.

13. Bauteil nach mindestens einem der Ansprüche 1 bis 11, bei dem es sich um einen Reaktor mit mindestens zwei getrennten Fluidkreisläufen handelt.

14. Reaktor nach Anspruch 13, wobei zusätzlich eine oder mehrere Reaktorplatten (9) zwischen den Platten (1) vorgesehen sind, wobei die Reaktorplatten (9) ein von den Platten (1) verschiedenes Kanalsystem aufweisen.

15. Reaktor nach Anspruch 14, wobei das in den Reaktorplatten (9) ausgebildete Kanalsystem die Vermischung von mindestens zwei zunächst getrennten Fluidströmen ermöglicht.

16. Reaktor nach Anspruch 14 und/oder 15, wobei die Reaktorplatten (9) katalytisch beschichtet sind.

## Claims

1. A component comprising a multiplicity of plates (1) stacked on one another, at least one of which consists of a ceramic material and in which by means of webs (2) a channel region is formed of fluid flow guide channels (3), which are in flow communication with inlet and outlet openings (4, 5, 6, 7), the stack of plates being connected with a force fit by means of a clamping device and a flat seal (8) respectively being arranged between the individual plates (1) of the stack, wherein the flat seal (8) consists of a resilient and/or compressible material and **characterized in that** it covers both the regions encompassing the channel region and the inlet and outlet openings (4, 5, 6, 7) as well as, at least partially, the web upper sides of the webs (2) forming the channels.

2. The component as claimed in claim 1, wherein the flat seal (8) covers 50-100% of the web upper sides of the webs (2) forming the channels.

3. The component as claimed in claim 1 and/or 2, wherein the flat seal (8) consists of elastomers, thermoelastic polymers, thermoplastic polymers, preferably of extruded polytetrafluoroethylene (ePTFE), or of graphite.

4. The component as claimed in at least one of the preceding claims, wherein the flat seal (8) consists of a material having a cold heading value ε_{KSW} according to DIN 28090-2 of ≥ 20%, preferably ≥ 30%, more preferably ≥ 40%.

5. The component as claimed in at least one of the preceding claims, wherein the flat seal (8) consists of a material having a compressibility according to ASTM F36 of ≥ 20%, preferably ≥ 35%, more preferably ≥ 45%.

6. The component as claimed in at least one of the preceding claims, wherein the ceramic material of at least one of the plates (1) consists of silicon carbide (SiC), fiber-reinforced silicon carbide, sintered silicon carbide (SSiC), silicon nitride (Si₃N₄), aluminum oxide (Al₂O₃), zirconium dioxide (ZrO₂), titanium diboride (TiB₂) or combinations thereof, preferably of sintered silicon carbide (SSiC).

7. The component as claimed in at least one of the preceding claims, wherein the guide channels (3) in the plate (1) are in flow communication with a first inlet opening (4) and a first outlet opening (5) for a first fluid, and the plate (1) is provided with a second inlet opening (6) and a second outlet opening (7) for a second fluid in order to supply a neighboring plate (1).

8. The component as claimed in at least one of the preceding claims, wherein the plates (1) have a thickness in the range of 0.2-20 mm, preferably 3-12 mm, more preferably 6-9 mm.

9. The component as claimed in at least one of the preceding claims, wherein the webs (2) of the guide channels (3) have a height in the range of 0.2-19 mm, preferably 0.2-10 mm, more preferably 0.2-6 mm, and end flush with the surface of the plates (1).

10. The component as claimed in at least one of the preceding claims, wherein the guide channels (3) are formed so as to obtain an essentially meandering profile of the fluid flow over the surface of the plates (1), the webs (2) furthermore having a multiplicity of interruptions or openings (14) which lead to turbulence of the fluid flow.

11. The component as claimed in at least one of the preceding claims, wherein two ceramic plates (1) are joined by a diffusion welding method with a material fit to form a seam-free monolithic plate block, and at least two such monolithic plate blocks are connected with a force fit by means of the flat seal (8).

12. The component as claimed in at least one of the preceding claims, which is a plate heat exchanger.

13. The component as claimed in at least one of claims 1 to 11, which is a reactor having at least two separate fluid circuits.

14. The reactor as claimed in claim 13, wherein one or more reactor plates (9) are additionally provided between the plates (1), the reactor plates (9) having a different channel system from the plates (1).

15. The reactor as claimed in claim 14, wherein the channel system formed in the reactor plates (9) permits mixing of at least two initially separate fluid flows.

16. The reactor as claimed in claim 14 and/or 15, wherein the reactor plates (9) are catalytically coated.

## Revendications

1. Elément de construction comprenant une pluralité de plaques (1) empilées les unes sur les autres dont au moins une est constituée d'un matériau céramique et dans lesquelles est aménagé, au moyen de traverses (2), une zone à canaux constituée de canaux de guidage (3) pour flux de fluide lesquels sont en communication de fluide avec des orifices d'entrée et de sortie (4, 5, 6, 7), l'empilement de plaques étant relié à force au moyen d'un dispositif de serrage, et un joint plat (8) étant disposé entre les différentes plaques (1), le joint plat (8) étant constitué d'un matériau élastique et/ou compressible et **caractérisé en ce qu'**il recouvre à la fois la zone à canaux et les zones entourant les orifices d'entrée et de sortie (4, 5, 6, 7) ainsi qu'au moins partiellement les faces supérieures des traverses (2) aménageant les canaux.

2. Elément de construction selon la revendication 1, le joint plat (8) recouvrant 50 à 100 % des faces supérieures des traverses (2) aménageant les canaux.

3. Elément de construction selon les revendications 1 et/ou 2, le joint plat (8) étant constitué d'élastomères, de polymères thermoélastiques, de polymères thermoplastiques, préférentiellement de polytétrafluoroéthylène extrudé (ePTFE) ou de graphite.

4. Elément de construction selon au moins une des revendications précédentes, le joint plat (8) étant constitué d'un matériau ayant un taux de refoulement à froid E_{K}sw, selon la norme DIN 28090-2, de ≥ 20 %, de préférence de ≥ 30 %, de préférence encore de ≥ 40 %.

5. Elément de construction selon au moins une des revendications précédentes, le joint plat (8) étant constitué d'un matériau ayant une compressibilité selon la norme ASTM F36 de ≥ 20 %, de préférence de ≥ 35 %, de préférence encore de ≥ 45 %.

6. Elément de construction selon au moins une des revendications précédentes, ledit matériau céramique d'au moins une des plaques (1) étant constitué de carbure de silicium (SiC), de carbure de silicium renforcé aux fibres, de carbure de silicium fritté (SSiC), de nitrure de silicium (Si₃N₄), d'oxyde d'aluminium (Al₂O₃), de dioxyde de zirconium (ZrO₂), de diborure de titane (TiB₂) ou de leurs combinaisons, préférentiellement de carbure de silicium fritté (SSiC).

7. Elément de construction selon au moins une des revendications précédentes, les canaux de guidage (3) au sein de la plaque (1) étant en communication de fluide avec un premier orifice d'entrée (4) et un premier orifice de sortie (5) destinés à un premier fluide, et la plaque (1) étant pourvue d'un deuxième orifice d'entrée (6) et d'un deuxième orifice de sortie (7) destinés à un deuxième fluide alimentant une plaque (1) adjacente.

8. Elément de construction selon au moins une des revendications précédentes, les plaques (1) ayant une épaisseur comprise entre 0,2 et 20 mm, de préférence entre 3 et 12 mm, de préférence encore entre 6 et 9 mm.

9. Elément de construction selon au moins une des revendications précédentes, les traverses (2) des canaux de guidage (3) ayant une hauteur comprise entre 0,2 et 19 mm, de préférence entre 0,2 et 10 mm, de préférence encore entre 0,2 et 6 mm, et étant à fleur de la surface des plaques (1).

10. Elément de construction selon au moins une des revendications précédentes, les canaux de guidage (3) étant réalisés tels que le flux du fluide traverse l'étendue des plaques (1) en suivant des méandres, les traverses (2) présentant en outre une pluralité d'interruptions ou de passages (14) rendant le flux de fluide encore plus turbulent.

11. Elément de construction selon au moins une des revendications précédentes, deux plaques céramiques (1) étant assemblées par liaison de matière au moyen d'un procédé de soudage par diffusion pour ainsi obtenir un bloc de plaques monolithique exempt de joints d'assemblage, et deux de ces blocs de plaques monolithiques étant reliés à force au moyen du joint plat (8).

12. Elément de construction selon au moins une des revendications précédentes, s'agissant d'un dispositif de transmission de chaleur par plaques.

13. Elément de construction selon au moins une des revendications 1 à 11, s'agissant d'un réacteur avec au moins deux circuits de fluide séparés.

14. Réacteur selon la revendication 13, chez lequel on prévoit, entre les plaques (1), une ou plusieurs plaques de réacteur (9) supplémentaires, les plaques de réacteur (9) présentant un système de canaux différent, par rapport aux plaques (1).

15. Réacteur selon la revendication 14, le système de canaux (9) formé au sein des plaques de réacteur (9) permettant le mélange d'au moins deux flux de fluide initialement séparés.

16. Réacteur selon les revendications 14 et/ou 15, les plaques de réacteur (9) étant pourvues d'un revêtement catalytique.
